# EUROPEAN PATENT APPLICATION

(11) **EP 3 549 692 A1**
(43) Date of publication of application: **09.10.2019**
(21) Application number: 17875231.7
(22) Date of filing: 03.08.2017
(51) Int. Cl.: B22C 5/04

(54) **CASTING SAND BINDER SUPPLY APPARATUS AND BINDER SUPPLY METHOD**

(30) Priority: 29.11.2016 JP 2016231048
(71) Applicant: Sintokogio, Ltd., Nagoya-shi, Aichi 450-6424 (JP)
(72) Inventor: OGYU Tsukasa, Toyokawa-shi Aichi 442-8505 (JP)
(74) Representative: Müller-Boré & Partner Patentanwälte PartG mbB
(86) International application number: PCT/JP2017/028232
(87) International publication number: WO 2018/100804

(57) **Abstract**

Provided are a binder supply apparatus and a binder supply method for foundry sand, capable of supplying an accurate amount of a binder to the foundry sand. The foundry sand binder supply apparatus of the present invention comprises: a hopper for storing a binder therein; a binder transfer device for transferring the binder; a binder measuring and discharging device disposed beneath a distal end of the binder transfer device, and a binder supply amount control device. The binder measuring and discharging device comprises: a measuring container for receiving the binder therein; a load cell for measuring the weight of the binder inside the measuring container; and a discharge device for discharging the binder from the measuring container. The binder supply amount control device is operable to control the discharge device to discharge the binder from the measuring container by a predetermined amount less than the whole amount of the binder inside the measuring container, and control the binder transfer device to supply the binder into the measuring container by the predetermined amount of the discharged binder.

## Description

### TECHNICAL FIELD

The present invention relates to a binder supply apparatus and a binder supply method for supplying a binder to foundry sand.

### BACKGROUND ART

Heretofore, there has been known a binder supply apparatus for foundry sand, designed to supply a binder to the foundry sand, as described, for example, in the following Patent Document 1. This conventional binder supply apparatus is equipped with a measuring hopper supported in a manner enabling weight measurement via a load cell, and configured such that, when a predetermined amount of the binder is supplied to the measuring hopper, a damper is opened to discharge the binder to a kneader.

### CITATION LIST

### [Parent Document]

Patent Document 1: JP 3268212 B

### SUMMARY OF INVENTION

### [Technical Problem]

However, in a case of using a binder having high adherability and bondability, the conventional binder supply apparatus for foundry sand involves the following problem. For example, although, when discharging a binder inside the measuring hopper and measured by the load cell, to the kneader, it is typically intended to discharge all of the binder, part of the binder adheres to and stays on an inner surface of the measuring hopper, in some cases. Thus, unevenness occurs in terms of the amount of the binder discharged from the measuring hopper, causing difficulty in discharging the binder in an accurate amount.

The present invention has been made in view of solving the above conventional problem, and an object thereof is to provide a binder supply apparatus and a binder supply method for foundry sand, capable of supplying an accurate amount of a binder to the foundry sand.

### [Solution to Technical Problem]

In order to achieve to achieve the above object, the present invention provides a binder supply apparatus for foundry sand, comprising: a hopper for storing therein a binder to be supplied to the foundry sand; a binder transfer means communicated with the hopper to transfer the binder inside the hopper; a binder measuring and discharging means disposed beneath a distal end of the binder transfer means, the binder measuring and discharging means comprising a measuring container for receiving the binder therein, a weight measurement means to measure the weight of the binder inside the measuring container, and a discharge means to discharge the binder from the measuring container; a binder supply amount control means to control the weight of the binder to be supplied from the binder transfer means to the binder measuring and discharging means; and a binder discharge amount control means to control the weight of the binder to be discharged from the measuring container of the binder measuring and discharging means, wherein the binder discharge amount control means is operable to control the discharge means to discharge the binder from the measuring container by a predetermined amount less than the whole amount of the binder inside the measuring container, and the binder supply amount control means is operable to control the binder transfer means to supply the binder into the measuring container by the predetermined amount pertaining to the discharge.

In the binder supply apparatus of the present invention having the above feature, the binder discharge amount control means operates to control the discharge means to discharge the binder from the measuring container by a predetermined amount less than the whole amount of the binder inside the measuring container, and the binder supply amount control means operates to control the binder transfer means to supply the binder into the measuring container by the predetermined amount pertaining to the discharge, so that it becomes possible to supply an accurate amount of the binder to the foundry sand, without causing the situation in which unevenness occurs in terms of the amount of the binder discharged from the measuring hopper as in the case where it is intended to discharge all of the binder inside the measuring container

Preferably, in the binder supply apparatus of the present invention, the hopper comprises a flexible member disposed along at least two surface areas of an inner peripheral surface thereof, and an actuator for lifting and lowering the flexible member.

According to this feature, it becomes possible to prevent jamming of the binder in the hopper in a suspended shelf-like manner (i.e., a state in which the binder inside the hopper is stuck inside the hopper and therefore cannot be discharged from a lower end of the hopper).

Preferably, in the binder supply apparatus of the present invention, the discharge means of the binder measuring and discharging means comprises a rotary member disposed inside the measuring container, and a rotary member drive means to rotate the rotary member to cause the binder to be discharged from the measuring container.

According to this feature, it becomes possible to discharge the binder inside the measuring container quickly and reliably, with a simplified structure.

Preferably, the binder supply apparatus of the present invention further comprises a binder stirring means disposed between the hopper and the binder transfer means to stir the binder.

According to this feature, the binder falls from the hopper is stirred to pulverize masses, lumps or the like in the binder as small as possible, so that it becomes possible to supply the bonder to the binder transfer means, under the condition that masses, lumps or the like in the binder are minimized.

Preferably, in the binder supply apparatus of the present invention, the foundry sand is core sand for making a core.

Preferably, in the above binder supply apparatus, the core sand is core sand for making an inorganic core.

The present invention further provides a binder supply method for foundry sand, for use with a binder supply apparatus for foundry sand, comprising: a hopper for storing therein a binder to be supplied to the foundry sand; a binder transfer means communicated with the hopper to transfer the binder inside the hopper; a binder measuring and discharging means disposed beneath a distal end of the binder transfer means, wherein the binder measuring and discharging means comprises a measuring container for receiving the binder therein, a weight measurement means to measure the weight of the binder inside the measuring container, and a discharge means to discharge the binder from the measuring container. The binder supply method comprises the steps of: transferring, by the binder transfer means, the binder inside the hopper to charge the transferred binder into the measuring container; discharging the binder from the measuring container by a predetermined amount less than the whole amount of the binder inside the measuring container; and supplying, by the binder transfer means, the binder into the measuring container by the predetermined amount pertaining to the discharge.

### [Effect of Invention]

The binder supply apparatus and the binder supply method of the present invention makes it possible to supply an accurate amount of the binder to the foundry sand.

### BRIEF DESCRIPTION OF DRAWINGS

FIG. 1 is a partially-sectional front view depicting a binder supply apparatus for foundry sand, according to one embodiment of the present invention.
FIG. 2 is a partially-sectional right side view depicting the binder supply apparatus according to this embodiment depicted in FIG. 1.
FIG. 3 is a detail front sectional view depicting a hopper of the binder supply apparatus according to this embodiment depicted in FIG. 1.
FIG. 4 is a sectional view as viewed along the IV-IV line in FIG. 3.
FIG. 5 is a side sectional view depicting a binder measuring and discharging device of the binder supply apparatus according to this embodiment depicted in FIG. 1.
FIG. 6 is a sectional view as viewed along the VI-VI line in FIG. 5.
FIG. 7 is a flowchart presenting an operation of and a binder supply method used in the binder supply apparatus according to this embodiment.

### DESCRIPTION OF EMBODIMENTS

With reference to the drawings, a binder supply apparatus for foundry sand, according to one embodiment of the present invention will now be described. In the binder supply apparatus according to this embodiment, core sand which is artificial sand for making an inorganic core is used as the foundry sand, and a powdered binder composed of a silica-based fine powder is supplied to the core sand.

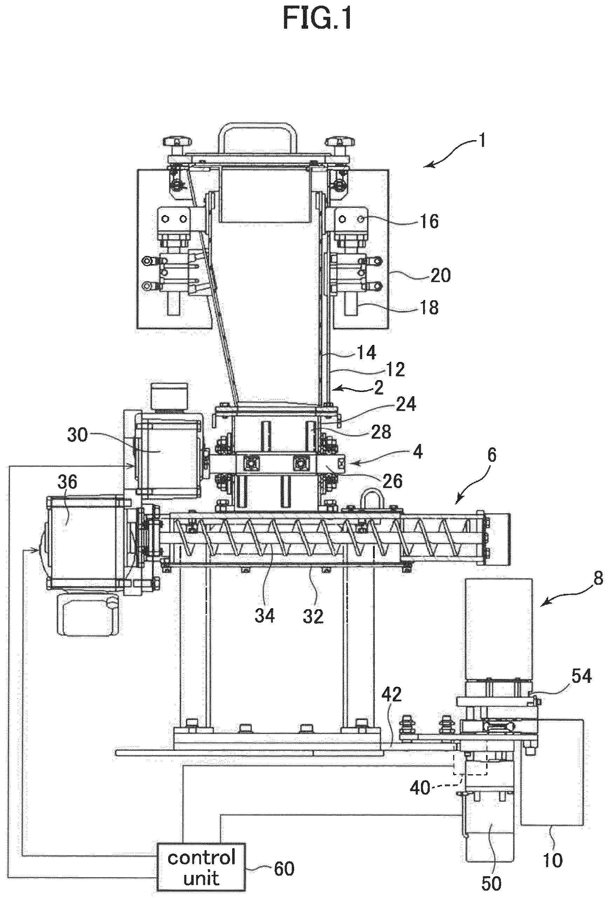

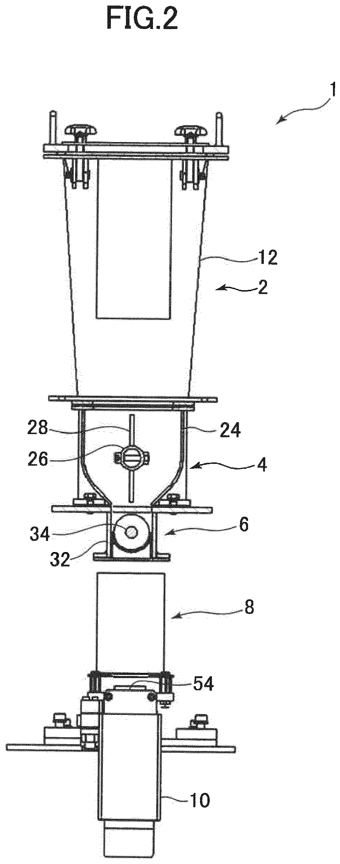

As depicted in FIGS. 1 and 2, the binder supply apparatus 1 according to this embodiment comprises: a hopper 2 for storing therein the binder to be supplied to the foundry sand; a binder stirring device 4 disposed beneath the hopper 2 to stir the binder; a binder transfer device 6 disposed beneath the stirring device 4 to transfer the binder in a horizontal direction; a binder measuring and discharging device 8 disposed beneath a distal end of the transfer device 6; and a chute 10 for receiving the binder discharged from the binder measuring and discharging device 8.

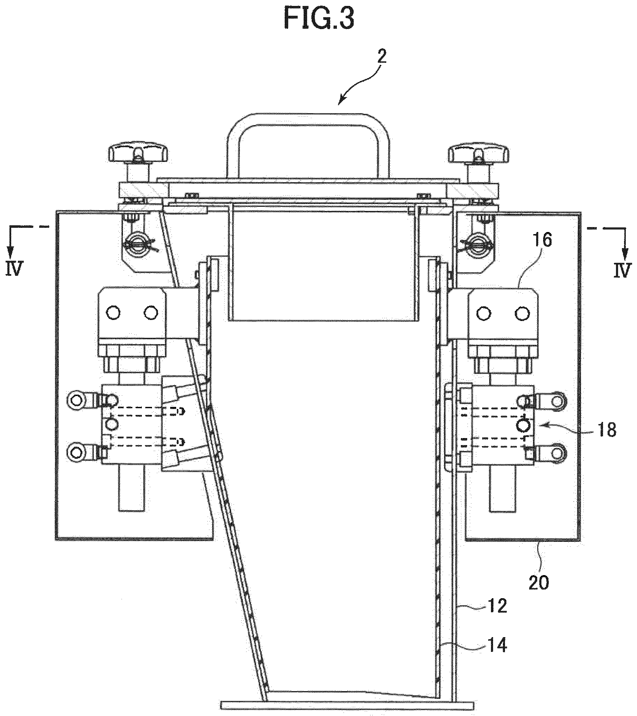

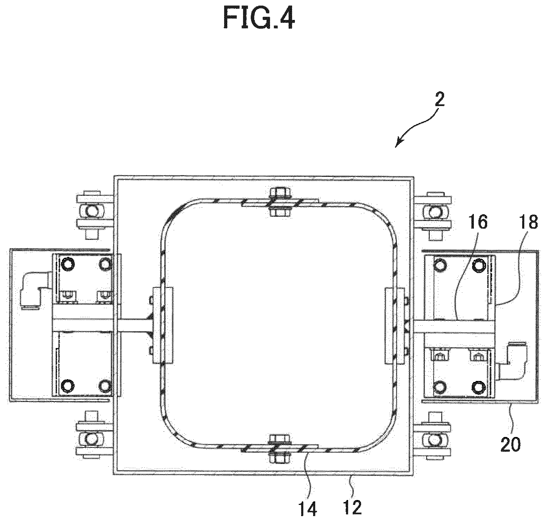

As depicted in FIGS. 3 and 4, the hopper 2 has an external casing 12, and a rubber member 14 serving as a flexible member is disposed along the entire circumference of a cross-sectionally rectangular-shaped inner peripheral surface of the external casing 12 (see FIG. 4). Two support members 16 are disposed outside the rubber member 14 in opposed relation, and each of the support members 16 is detachably attached to the rubber member 14. Further, two lifting-lowering cylinders 18 serving as an actuator for lifting and lowering the rubber member 14 are mounted outside the external casing 12 of the hopper 2 in opposed relation, and a distal end of a piston rod of each of the lifting-lowering cylinders 18 is coupled to a corresponding one of the support members 18. Each of the lifting-lowering cylinders 18 is an air cylinder. The support members 16 and the lifting-lowering cylinders 18 of the hopper 2 are covered by a safety cover 20.

As depicted in FIG. 1, the binder stirring device 4 for stirring the binder is coupled to a lower end of the hopper 2 such that the binder inside the hopper 2 can move downwardly into the binder stirring device 4. The binder stirring device 4 comprises: a casing 24; a rotary shaft 26 extending in a horizontal direction while penetrating through the casing 24; a plurality of stirring blades 28 fixed to the rotary shaft 26; and a stirring motor 30 coupled to one end of the rotary shaft 26 to rotate the rotary shaft 26.

As depicted in FIG. 1, the binder transfer device 6 is coupled to a lower end of the binder stirring device 4, such that the binder inside the binder stirring device 4 can move downwardly into a base end (in FIG. 1, a left end) of the binder transfer device 6. The binder transfer device 6 comprises: a hollow cylindrical-shaped trough 32; a screw 34 disposed inside the trough 32; and a transfer motor 36 coupled to one end (left end) of the screw 34 to rotate the screw 34.

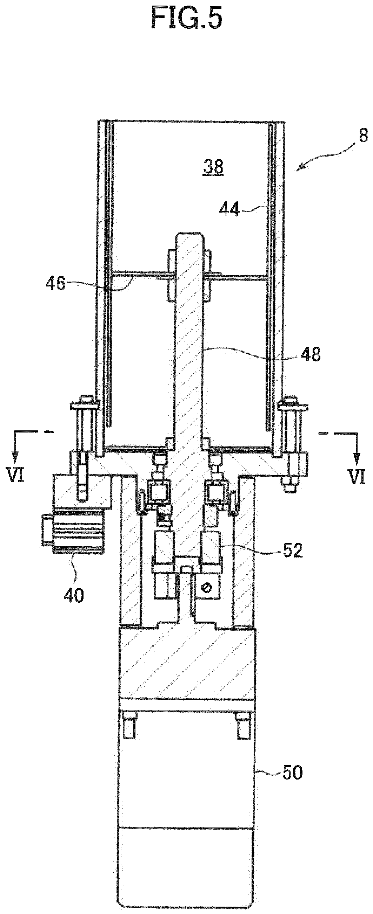

As depicted in FIGS. 1 and 5, the binder measuring and discharging device 8 is disposed beneath the distal end of the binder transfer device 6, as mentioned above. As in FIG. 5, the binder measuring and discharging device 8 comprises a hollow cylindrical-shaped measuring container 38. A load cell 40 is disposed on the bottom of the measuring container 38 to serve as a weight measurement means to measure the weight of the binder inside the measuring container 38. This load cell 40 is attached to a support member 42.

Two rotary members 44 are arranged inside the measuring container 38 to extend vertically, with a small gap with respect to an inner peripheral surface of the measuring container 38. Each of the rotary members 44 is fixed to the rotary shaft 48 through a respective one of two support members 46 each extending horizontally. Further, a discharge motor 50 is disposed beneath the measuring container 38, and the rotary shaft 48 and an output shaft of the discharge motor 50 are coupled together by a coupling 52.

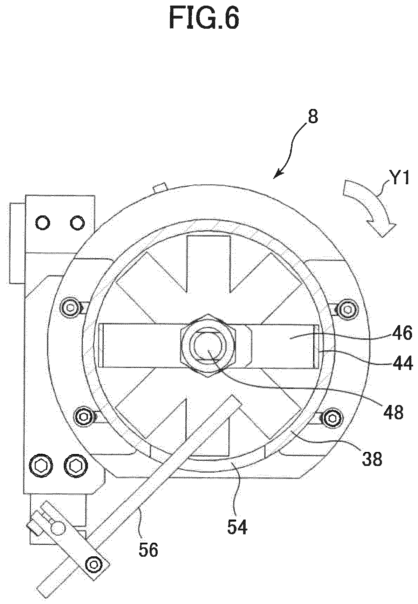

As depicted in FIG. 6, a portion of the measuring container 38 located below the rotary members 44, i.e., a lower portion of the measuring container 38, is provided with a binder discharge port 54. Further, a bar member 56 is provided which is fixed at a position outside the measuring container 38. This bar member 56 is disposed such that a distal end of the bar member 56 is inserted into the measuring container 38 through the discharge port 54. Further, as depicted in FIG. 1, the chute 10 is disposed beneath the measuring container 38 in an outwardly offset manner, such that the binder discharged from the discharge port 54 of the measuring container 38 can be put into the chute 10.

Here, as depicted in FIG. 1, a control unit 60 is provided which is design to control of respective operations of the binder stirring device 4, the binder transfer device 6, and the binder measuring and discharging device 8. This control unit 60 is configured to control activation and deactivation of each of the stirring motor 30 of the binder stirring device 4, the transfer motor 36 of the binder transfer device 6, and the discharge motor 50 of the binder measuring and discharging device 8.

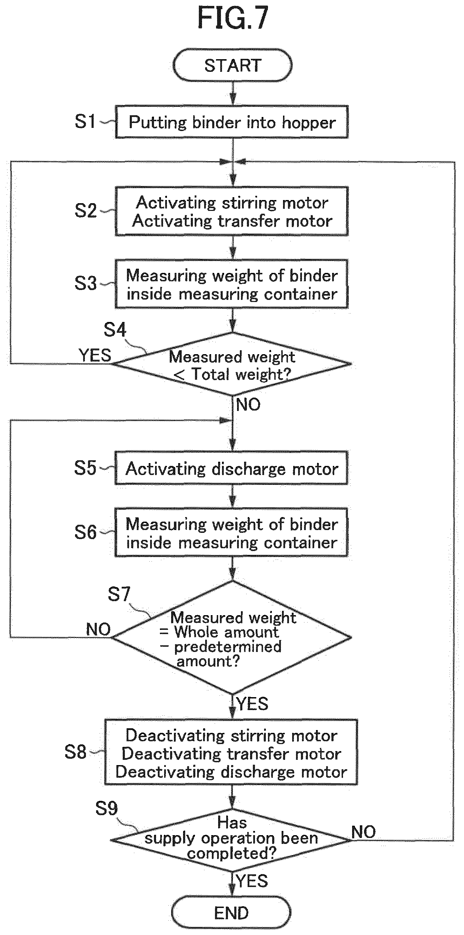

Next, with reference to FIG. 7, an operation and a binder supply method of the binder supply apparatus 1 according to this embodiment will be described. In FIG. 5, S denotes "step".

First of all, in S1, the binder is put into the hopper 2 by a non-depicted binder conveyance means such as a belt conveyer.

Subsequently, in S2, the stirring motor 30 and the transfer motor 36 are activated. Specifically, the stirring motor 30 is activated to rotate the steering blades 28 so as to stir the binder moved downwardly from the hopper 2, and then the transfer motor 36 is activated to rotate the screw 34. In this way, the binder falling from the inside of the holler 2 via the binder stirring device 4 is transferred and discharged from the distal end of the trough 32, so that the binder is charged into the measuring container 38.

Here, in this embodiment, during operation of the transfer motor 36, i.e., in the course of transferring the binder by the screw 34, the lifting-lowering cylinders 18 are operated to lift and lower the rubber member 14 inside the hopper 2, and the stirring motor 30 is operated to rotate the rotary shaft 26 and the stirring blades 28. Further, an operating time (i.e., a binder transport time) of the binder transport motor 36 is measured by a measurement means such as a timer.

When the lifting-lowering cylinders 18 are operated to lift and lower the rubber member 14 inside the hopper 2, an upward-downward movement of the rubber member 14 according to an upward-downward movement of the piston rod of the lifting-lowering cylinders 18 may be performed at least once (by at least one cycle). Alternatively, it may be repeated plural times. In the case where the upward-downward movement is repeated plural times, it becomes possible to more effectively prevent the binder from adhering to the inner peripheral surface of the hopper 2.

Subsequently, the routine proceeds to S3. In the S3, the weight of the binder filled in the measuring container 38 before discharge is measured by the load cell 40. Then, the routine proceeds to S4. In the S4, it is determined whether or not the measured binder weight is less than the whole amount, i.e., a reference amount, of the binder to be filled in the measuring container 38. When the measured binder weight is determined to be less than the whole amount, the routine returns to S2 and continues the charging of the binder into the measuring container 38.

On the other hand, when, in the S4, the measured binder weight is determined to become equal to the whole amount, the routine proceeds to S5. In the S5, the discharge motor 50 is activated. The discharge motor 50 is operated to rotate the rotary members 44 through the rotary shaft 48 and the support members 46. In this way, a "predetermined amount of the binder" which is less than the whole amount of the binder inside the measuring container 38 is discharged from the discharge port 54 of the measuring container 38. Specifically, when the rotary members 44 are rotated (turned) in a direction indicated by the arrowed mark (see FIG. 6) (in a clockwise direction), the binder inside the measuring container 38 is brought into collision with the bar member 56 and discharged from the discharge port 54.

Subsequently, the routine proceeds to S6. In the S6, the weight of the measuring container 38 is measured by the load cell 40. Subsequently, the routine proceeds to S7. In the S7, it is determined whether or not a value of the load cell 40, i.e., a measured weight, becomes equal to a weight value derived by subtracting the aforementioned predetermined amount from the aforementioned whole amount of the binder before discharge, i.e., the following formula is satisfied: "the measured weight = the whole amount - the predetermined amount". Until the value of the load cell 40 becomes equal to the weight value derived by subtracting the predetermined amount from the whole amount, the routine returns to the S5 to continue the discharge of the bonder. When, in the S7, the value of the load cell 40 is determined to become equal to the weight value derived by subtracting the predetermined amount from the whole amount, the stirring motor 30, the transfer motor 36 and the discharge motor 50 are deactivated to stop the discharge of the binder from the discharge port 54 of the measuring container 38, in S8.
The discharged binder is supplied to a non-depicted kneader via the chute 10.

Subsequently, the routine proceeds to S9. In the S9, it is determined whether or not the binder supply operation is permitted to be terminated. When the binder supply operation has not been completed, it is necessary to continue the binder supply operation. Thus, the routine returns to the S2 to continue the same operation. More specifically, the step of discharging the binder from the discharge port 54 of the measuring container 38 by the predetermined amount less than the whole amount of the binder inside the measuring container 38 and the step of adding the binder into the measuring container 38 by the predetermined amount pertaining to the discharge are repeated. When, in the S9, the binder supply operation is determined to be permitted to be terminated, the binder supply operation is terminated.

The binder supplied to the non-depicted kneader via the chute 10 is kneaded together with the foundry sand, liquid binder and others in the kneader, and formed into wet sand. Using this wet sand, an inorganic core is made by an inorganic core-making machine.

Although the above embodiment has been described based on an example where the rubber member 14 is disposed along the entire circumference, i.e., all of four surface areas (four faces) of the inner peripheral surface of the external casing 12 of the hopper 2 (see FIG. 4), the embodiment of the present invention is not limited thereto. The rubber member 14 may be disposed along at least two surface areas of the inner peripheral surface of the external casing 12 of the hopper 2, wherein the rubber member 14 disposed along the at least two surface areas may be configured to be lifted and lowered by the lifting-lowering cylinders 18.

As above, in the above embodiment, the rubber member 14 is disposed along the at least two surface areas of the inner peripheral surface of the external casing of the hopper 2, and the lifting-lowering cylinders 18 are provided as a means to lift and lower the rubber member 14. Thus, the rubber member 14 is shaken during the lifting and lowering, so that it is possible to prevent the binder from adhering to the inner peripheral surface of the external casing 12 of the hopper 2. This provides an advantage of being able to prevent jamming of the binder in the external casing 12 of the hopper 2 in a suspended shelf-like manner.

In the above embodiment, the rotary members 44 are disposed inside the measuring container 38, and configured to be rotated to cause the binder to be discharged from the measuring container 38. This provides an advantage of being able to discharge the binder inside the measuring container quickly and reliably, with a simplified structure.

In the above embodiment, the binder stirring device 4 is disposed between the hopper 2 and the binder transfer device 6. Thus, the binder falls from the hopper 2 is stirred to pulverize masses, lumps or the like in the binder as small as possible. This provides an advantage of being able to supply the bonder to the binder transfer device 6, under the condition that masses, lumps or the like in the binder are minimized.

Further, although the above embodiment has been described based on an example where the rubber member 14 is used as a flexible member disposed along the inner peripheral surface of the external casing 12 of the hopper 2 and configured to be lifted and lowered, the present invention is not limited thereto. For example, a vinyl member may be used.

Further, although the above embodiment has been described based on an example where a system using the screw 34 configured to be rotated by the transfer motor 36 is employed as the binder transfer device 6, the present invention is not limited thereto. For example, a system using a belt conveyer for transferring the binder may be employed.

Further, although the above embodiment has been described based on an example where, during during operation of the transfer motor 36, i.e., in the course of transferring the binder by the screw 34, the lifting-lowering cylinders 18 are basically operated to lift and lower the rubber member 14 inside the hopper 2, the present invention is not limited thereto. For example, during operation of the binder supply apparatus 1, the lifting-lowering cylinders 18 are basically configured to be not activated. In this case, only when, in the step of adding the binder into the measuring container 38 by the predetermined amount pertaining to the discharge, addition of the binder cannot be completed even after the elapse of a predetermined time period, the lifting-lowering cylinders 18 may be activated to lift and lower the rubber member 14 inside the hopper 2. In addition to this, when addition of the binder cannot be completed even after the elapse of a predetermined time period, the aforementioned non-depicted binder conveyance means such as a belt conveyer may be activated to put the binder into the hopper 2. Here, the predetermined time period may be set by a timer or the like.

Further, the binder conveyance means in this embodiment is not limited to a mechanical conveyancer means. For example, the binder may be manually put into the hopper 2 by a worker.

Further, although the above embodiment has been described based on an example where the binder is supplied to core sand for making an inorganic core, the present invention is not limited thereto. For example, the present invention may be applied to a process of making any type of core other than an inorganic core, as long as the process needs to supply a binder to core sand. Further, the present invention may be applied to a process of making a mold using green sand, as long as the process needs to supply a binder to the green sand. Further, the present invention may be applied to a process of making a self-hardening mold, as long as the process needs to supply a binder to self-hardening foundry sand.

### LIST OF REFERENCE SIGNS

1: binder supply apparatus for foundry sand
2: hopper
4: binder stirring device (binder stirring means)
6: binder transfer device (binder transfer means)
8: binder measuring and discharging device (binder measuring and discharging means)
10: chute
14: rubber member
16: support member
18: lifting-lowering cylinder
26: rotary shaft
28: stirring blade
30: stirring motor
32: trough
34: screw
36: transfer motor
38: measuring container
40: load cell (weight measuring means)
44: rotary member
48: rotary shaft
50: discharge motor
54: discharge port
56: bar member
60: control unit (binder supply amount control means, binder discharge amount control means)

## Claims

1. A binder supply apparatus for foundry sand, comprising:
a hopper for storing therein a binder to be supplied to the foundry sand;
a binder transfer means communicated with the hopper to transfer the binder inside the hopper;
a binder measuring and discharging means disposed beneath a distal end of the binder transfer means, the binder measuring and discharging means comprising a measuring container for receiving the binder therein, a weight measurement means to measure the weight of the binder inside the measuring container, and a discharge means to discharge the binder from the measuring container;
a binder supply amount control means to control the weight of the binder to be supplied from the binder transfer means to the binder measuring and discharging means; and
a binder discharge amount control means to control the weight of the binder to be discharged from the measuring container of the binder measuring and discharging means;
wherein
the binder discharge amount control means is operable to control the discharge means to discharge the binder from the measuring container by a predetermined amount less than a whole amount of the binder inside the measuring container, and
the binder supply amount control means is operable to control the binder transfer means to supply the binder into the measuring container by the predetermined amount pertaining to the discharge.

2. The binder supply apparatus according to claim 1, wherein the hopper comprises a flexible member disposed along at least two surface areas of an inner peripheral surface thereof, and an actuator for lifting and lowering the flexible member.

3. The binder supply apparatus according to claim 1 or 2, wherein the discharge means of the binder measuring and discharging means comprises a rotary member disposed inside the measuring container, and a rotary member drive means to rotate the rotary member to cause the binder to be discharged from the measuring container.

4. The binder supply apparatus according to claim 1 or 2, which further comprises a binder stirring means disposed between the hopper and the binder transfer means to stir the binder.

5. The binder supply apparatus according to claim 1 or 2, wherein the foundry sand is core sand for making a core.

6. The binder supply apparatus according to claim 5, wherein the core sand is core sand for making an inorganic core.

7. A binder supply method for foundry sand, for use with a binder supply apparatus for foundry sand, comprising: a hopper for storing therein a binder to be supplied to the foundry sand; a binder transfer means communicated with the hopper to transfer the binder inside the hopper; a binder measuring and discharging means disposed beneath a distal end of the binder transfer means, wherein the binder measuring and discharging means comprises a measuring container for receiving the binder therein, a weight measurement means to measure the weight of the binder inside the measuring container, and a discharge means to discharge the binder from the measuring container, the binder supply method comprising the steps of:
transferring, by the binder transfer means, the binder inside the hopper to charge the transferred binder into the measuring container;
discharging the binder from the measuring container by a predetermined amount less than a whole amount of the binder inside the measuring container; and
supplying, by the binder transfer means, the binder into the measuring container by the predetermined amount pertaining to the discharge.
